# EUROPÄISCHE PATENTSCHRIFT

(11) **EP 2 013 811 B1**
(45) Veröffentlichungstag und Bekanntmachung des Hinweises auf die Patenterteilung: **14.05.2014**
(21) Anmeldenummer: 07722025.9
(22) Anmeldetag: 14.03.2007
(51) Int. Cl.: G06F 21/62

(54) **VERFAHREN UND VORRICHTUNG ZUR PSEUDONYMISIERUNG VON DIGITALEN DATEN**
METHOD AND DEVICE FOR THE PSEUDONYMIZATION OF DIGITAL DATA
PROCÉDÉ ET DISPOSITIF POUR PSEUDONYMISER DES DONNÉES NUMÉRIQUES

(30) Priorität: 17.03.2006 DE 102006012311
(43) Veröffentlichungstag der Anmeldung: 14.01.2009
(73) Patentinhaber: Deutsche Telekom AG, 53113 Bonn (DE)
(72) Erfinder: EHRENSCHWENDER, Dieter, 91475 Lonnerstadt (DE); HENKEL, Gerhard, 53721 Siegburg (DE); KALCK, Stefan, 99817 Eisenach (DE); KERN, Heiko, 64347 Griesheim (DE)
(74) Vertreter: Kewitz, Ansgar
(86) Internationale Anmeldenummer: PCT/DE2007/000452
(87) Internationale Veröffentlichungsnummer: WO 2007/110035

(56) Entgegenhaltungen:
- EP-A- 1 416 419
- WO-A-01/18631
- WO-A-2005/109294
- US-A1- 2002 073 138
- US-A1- 2002 169 793
- US-A1- 2004 199 781
- US-A1- 2005 283 621

## Beschreibung

Die vorliegende Erfindung bezieht sich auf ein Verfahren und eine Vorrichtung zur Pseudonymisierung von digitalen Daten, insbesondere um die statistische Auswertung von personenbezogenen Datensätze aus unterschiedlichen Quellsystemen nach Kennziffern zu ermöglichen. Darüber hinaus soll die Erfindung auch eine unter kontrollierten Bedingungen erfolgende Reidentifizierung ermöglichen.

### Gebiet der Erfindung:

Pseudonymisierung ist das Verändern personenbezogener Datensätze durch eine Zuordnungsvorschrift derart, dass die Einzelangaben über persönliche oder sachliche Verhältnisse ohne Kenntnis oder Nutzung der Zuordnungsvorschrift nicht mehr einer natürlichen Person zugeordnet werden können.

Dazu werden beispielsweise die Identifikationsdaten durch eine Abbildungsvorschrift in ein willkürlich gewähltes Kennzeichen (das Pseudonym) überführt.

Ziel eines solchen Verfahrens ist es, nur bei Bedarf und unter Einhaltung vorher definierter Rahmenbedingungen den Personenbezug wieder herstellen zu können.

Pseudonymisïerte Daten sind nach § 3 Abs. 6a BDSG personenbeziehbare Daten, weil definitionsgemäß eine Zuordnung zwischen dem Pseudonym und dem Namen der Person prinzipiell möglich sein soll. Umgekehrt soll die Pseudonymisierung aber nach S 3 Abs. 6 a BDSG eine zufällige Reidentifizierung praktisch ausschließen oder zumindest erschweren. Die Pseudonymisierung muss also - abgesehen von der Existenz einer Zuordnungsfunktion - für Dritte die Qualität faktisch anonymisierter Daten erreichen. Hierzu sind entsprechende mathematische Verfahren einzusetzen, wozu auch das Auffüllen von Datensätzen gehört, um ihre Reidentifizierung wirkungsvoll zu verhindern.

Die Re-Identifizierung kann mitunter auch ausschließlich dem Betroffenen vorbehalten bleiben.

Hinsichtlich der Anonymisierung wird auf die Anmerkung zur Definition und Abgrenzung "Pseudonymisierung" und "Anonymisierung": Vgl. Auszug (S.274 bis S. 280) aus Kommentar zum Bundesdatenschutzgesetz (Simitis). Hieraus ist ersichtlich, dass eine Anonymisierung immer dann vorliegt, wenn eine Identitätsbestimmung nicht mehr möglich ist, oder nur mit einem enormen und unverhältnismäßigen Aufwand.

WO 01 18 631 zeigt ein Verfahren zum Pyseudonymisieren, wobei Patientendaten in einer Datenbank pseudonymisiert werden.

Im Folgenden wird der Bereich der Erfindung anhand von Beispielen beschrieben.

Als ein erstes Anwendungsbeispiel ist die unternehmensweite Auswertung von Personaldaten denkbar. So wird z.B eine unternehmensweite Suche nach Mitarbeitern mit einem bestimmten Qualifikationsprofil für einen Auslandseinsatz beabsichtigt. Das rechtliche Problem dieser Konstellation ist, dass die Arbeitsverhältnisse in der Regel nur mit der jeweiligen juristischen Person bestehen, nicht aber mit dem Gesamtunternehmen. Mangels vertraglicher Rechtsgrundlage ist die Übermittlung von Personaldaten an andere Arbeitgeber daher nur mit Zustimmung der betroffenen Personen zulässig. Zur Vermeidung von Datenschutzproblemen würde nach dem Konzept ein erster Suchlauf nach Personen mit einem geforderten Qualifikationsprofil zunächst nur über die pseudonymisierten Datensätze erfolgen, anschließend wäre eine Reidentifizierung nur für den ermittelten Mitarbeiterkreis erforderlich, um diesen direkt ansprechen zu können. In diesem Fall sind dann die rechtlichen Voraussetzungen der Reidentifizierung zu beachten.

Ein zweites Anwendungsbeispiel ist die Verwaltung von Rechnungsdaten der Nutzer eines TK- oder Onlinedienstes. Die Rechnungsdaten sollen pseudonymisiert verwaltet und erst für die Einziehung des Rechnungsbetrages bzw. die Übersendung der Rechnung an den Kunden reidentifiziert werden.

Ein weiteres Beispiel ist das Outsourcing der Verarbeitung personenbezogener Datensätze an einen Datenverarbeiter mit Sitz im Ausland, insbesondere in einem Drittstaat ohne ein mit der Europäischen Union vergleichbaren Schutzniveau. In diesem Fall würde die Pseudonymisierung bzw. Reidentifizierung ausschließlich in der Hand des Auftraggebers im Inland erfolgen, während sich die Rechenprozesse des Auftragnehmers lediglich auf die Verarbeitung pseudonymisierter Daten beschränken.

Schließlich könnte die Erfindung zur Anwendung kommen, um eine Verarbeitung personenbezogener Datensätze mit aktuell verfügbaren Rechenkapazitäten unterschiedlicher Stellen zu ermöglichen.

### Überblick über die Erfindung:

Aufgabe der Erfindung ist eine Lösung, die qualitative Aussagen über Datensätze aus unterschiedlichen Systemen ermöglicht, aber gleichzeitig auch im Sinne einer möglichen Gesetzgebung datensparsam die schutzwürdigen Interessen der Betroffenen zu wahren. Über das Modell der Pseudonymisierung werden Auswertungen möglich, die mit personenbezogenen Individualdaten datenschutzrechtlich unzulässig wären. Gleichzeitig ermöglicht die Erfindung aber auch eine Reidentifizierung der Datensätze, allerdings unter kontrollierten und damit vorgegebenen Voraussetzungen.

Die Erfindung soll einen Beitrag zur Einhaltung des Datenschutzes bieten, indem sie durch die Pseudonymisierung vor einer unzulässigen Nutzung geschützt werden. Hierdurch wird dem Datenschutzmanagement eine zentrale Rolle zugewiesen, denn es sichert Kunden- oder Personaldaten vor unzulässigen Zugriffen und Verarbeitungen und leistet damit eine wichtige Voraussetzung für die Akzeptanz der Verarbeitung bei den Betroffenen.

Gelöst wird diese Aufgabe durch eine Erfindung mit den Merkmalen der unabhängigen Ansprüche.

Zum Verständnis der Erfindung sind die folgenden Bereiche zu unterscheiden:
- Die Quelle der Daten (Source List), aus der die personenbezogenen Datensätze gewonnen werden. Im Quellsystem können bspw. die Personaldaten einer Konzerntochter oder die Kundendaten eines Systems zur Erstellung von Rechnungen liegen.
- Der Empfänger (Zielsystem), der die Daten in der Regel anonymisiert erhält, aber unter "kontrollierten und festgelegten Bedingungen" zum Zweck einer späteren Reidentifizierung diese Daten auch pseudonymisiert bekommen kann.
- Der T-IP (T-Identity-Protector), in dem die Pseudonymisierung nach dem "Konzept des auf unterschiedliche Rollen verteilten Wissens" durchgeführt bzw. aufgehoben wird. Innerhalb des T-IP Systems ist die Verarbeitung der Daten auf unterschiedliche Rollen verteilt. Auf diese Rolle bzw. Komponenten wird weiter unten eingegangen. Wobei der zweistufige Prozess der Pseudonymisierung, wie er in den Ansprüchen beschrieben wird, ein wichtiger Aspekt ist.

Die Vorpseudonymisierung erfolgt in der Verantwortung des Quellsystems durch eine vom T-IP bereitgestellte Pseudonymisierungsbox bzw. Pseudonymisierungssytem (T-IP Client). Der T-IP-Client befindet sich vorzugsweise im Verantwortungsbereich der für das Quellsystem verantwortlichen Stelle. Die starke Pseudonymisierung findet dann im T-IP - Master statt.

Für den Empfänger des Zielsystems ist zu klären, unter welchen Voraussetzungen er pseudonymisierte an Stelle von anonymisierten Daten erhalten darf und welche Anforderungen an den Grad der Pseudonymisierung zu stellen sind.

Zum anderen ist von Bedeutung, unter welchen Voraussetzungen eine Reidentifizierung zulässig ist.

Unter welchen Voraussetzungen eine Reidentifizierung zulässig sein soll, hängt vom jeweiligen Verwendungszusammenhang ab.

Die Aufgabe der Pseudonymisierung übernimmt der T-IP auf der Basis eines nach unterschiedlichen Rollen verteilten Wissens bezeichneten Modell, das im Folgenden in den wesentlichen Grundzügen zusammengefasst dargestellt wird.

Das Prinzip des auf unterschiedliche Rollen verteilten Wissens soll eine wirkungsvolle Pseudonymisierung ermöglichen und eine unkontrollierte Reidentifizierung verhindern. Hierzu wird sowohl das für die Pseudonymisierung als auch das für die Reidentifizierung erforderliche Wissen auf unterschiedliche Rollen verteilt. Der Informationsfluss zwischen diesen Rollen ist technisch unterstützt reglementiert, um eine regelwidrige Reidentifizierung zu verhindern. Die Sicherheit des Verfahrens kann dadurch erhöht werden, dass einzelne Rollen Dritten außerhalb der für den T-IP verantwortlichen Stelle zugewiesen werden können.

Der T-IP übernimmt dabei vorzugsweise die folgenden Aufgaben: das Pseudonymisieren, das Erkennen fehlerhafter Daten, die verschlüsselte Übermittlung der Daten an einen Empfänger unter der Voraussetzung einer sicheren Authentifizierung, das Vorhalten pseudonymisierter Daten für Auswertungszwecke, die statistische Auswertung pseudonymisierter Daten, das Generieren, Verwalten und Löschen der Informationen zur Pseudonymisierung und zur Reidentifizierung und die Unterstützung der Reidentifizierung.

Der T-IP besteht hierbei in seiner bevorzugten Ausführungsform aus den folgenden Komponenten, dem T-IP Client, dem T-IP Master, der T-IP Trusted Database (T-DB) und der Vertrauensstelle.

Der T-IP-Client steht in der Verantwortung des Quellsystems, so dass weder der Betreiber des T-IP Masters bzw. der T-DB noch das Zielsystem einen Zugriff auf die in dem T-IP-Client durchgeführte Vorpseudonymisierung hat. Die technische Funktionalität des T-IP Clients ist aber Bestandteil der Dienstleistung des T-IP.

Im T-IP -Master erfolgt die Verarbeitung der pseudonymisierten Datensätze, aber nicht die Verwaltung der Pseudonyme.

Die T-DB verwaltet die Pseudonyme und ihre Identifikatoren im Zusammenwirken mit der vertrauensstelle. Datensätze werden aber von T-DB mit Ausnahme der Quell-ID der Datensätze nicht verarbeitet.

Ohne Vertrauensstelle kann eine Reidentifizierung der pseudonymisierten Daten nicht angestoßen werden. Ihre Rolle darf daher nicht von dem Betreiber des T-IP -Master bzw. der T-DB übernommen werden.

Der Ablauf der Pseudonymisierung läuft nach dem folgenden Schema ab.

Der T-IP-Client erhält personenbezogene Datensätze aus einem mit einer Quell-ID versehenen Quellsystem. Er erstellt aus Name, Geburtsdatum und anderen eindeutigen Identifikatoren ein Vorpseudonym (PI) mit Hilfe einer geschützten Hash-Funktion und liefert den PI an das Quellsystem. Ferner können mögliche Identifikatoren wie Geburtsdatum oder Postleitzahl auf zur Auswertung notwendige Klassen wie Geburtsjahr oder Postleitzahlbereich reduziert werden.

Der so aufbereitete Datensatz wird mit einer Quell-ID versehen, die auf die Ursprungsdatei im Quellsystem verweist, und vorzugsweise einem Prüfwert, um die Integrität der Daten sicherzustellen.

Diese vorpseudonymisierten Datensätze werden an den T-IP - Master übermittelt. Der T-IP-Client löscht dann die von dem Quellsystem erhaltenen personenbezogenen Daten.

Der T-IP-Client steht im Verantwortungsbereich des Quellsystems. Er wird der für das Quellsystem verantwortlichen Stelle von dem T-IP ausschließlich für den Zweck der Pseudonymisierung zur Verfügung gestellt. Die Pseudonymisierung erfolgt in einer Art Black Box.

Nach Abschluss der Pseudonymisierung verfügt das Quellsystem über die Ausgangsdaten, die Quell-ID sowie den PI, während im T-IP-Client nach der Übermittlung der vorpseudonymisierten Daten alle Daten gelöscht wurden. Der T-IP -Master bekommt vom Quellsystem mit Unterstützung des T-IP-Client den mit PI vorpseudonymisierten Datensatz sowie die Quell-ID, die auf die Datenbank des Quellsystems verweist.

Der T-IP -Master empfängt die vom T-IP-Client für diese Anforderung generierten vorpseudonymisierten Datensätze.

Daraufhin erstellt er zu jedem Datensatz ein Pseudonym (PPI), das aus dem Vorpseudonym (PI) und der Quell-ID, und vorzugsweise einem Streuwert (Salt) und einem Zeitwert generiert wird, und bildet vorzugsweise aus kritischen personenbezogenen Daten statistische Klassen (SD), und verändert die Datenfelder vorzugsweise, die in Kombination mit anderen Informationen eine Reidentifizierung ermöglichen, und gibt sie als unkritische Daten (UD) an das Zielsystem weiter.

Weiterhin werden standardmäßig die jeweiligen Datensätze ohne Pseudonym (PPI) an das Zielsystem übermittelt.

Wobei Datensätze mit dem Pseudonym (PPI) an das Zielsystem nur auf besondere Anforderung transferiert werden. In diesem Fall werden für Zwecke einer späteren Reidentifizierung die Informationen aus den Feldern PPI, Quell-ID, PI und Zeitwert an die T-DB übermittelt.

Nach Abschluss der Pseudonymisierung werden die Daten gelöscht.

Für Standardauswertungen werden nur anonymisierte Datensätze (ohne PPI) an das Zielsystem ausgeliefert. Sollen die Datensätze nach einer solchen Auswertung reidentifiziert werden können, dann werden die Datensätze mit den Pseudonymen (PPI) an das Zielsystem übermittelt.

Durch die doppelte Pseudonymisierung - der Vorpseudonymisierung im T-IP-Client unter der Verantwortung des Quellsystems, der nachfolgenden Pseudonymisierung im T-IP -Master sowie der Verwaltung der Pseudonyme in der T-DB - wird eine unkontrollierte Reidentifizierung im Zielsystem verhindert.

Das Zielsystem kann den PPI in Zusammenarbeit mit der T-DB zwar dem Vorpseudonym PI zuordnen, aber letztere kann PI über die Quell-ID nur in Zusammenwirken mit dem Quellsystem reidentifizieren.

Eine Reidentifizierung kann auch nicht durch ein Zusammenwirken zwischen Zielsystem und T-IP -Master erfolgen, denn letzterer hat nach Abschluss der Pseudonymisierung keine Daten mehr gespeichert.

Eine Reidentifizierung ist also nur mit Hilfe der Informationen aus dem jeweiligen Quellsystem möglich. Dieses trägt jedoch gegenüber dem Betroffenen die Verantwortung, wenn es das Pseudonym aufdeckt und dadurch eine rechtfertigungsbedürftige Übermittlung personenbezogener Datensätze an das Zielsystem auslöst.

### Figurenbeschreibung:

Die folgenden Figuren dienen zum besseren Verständnis der Erfindung im Einzelnen zeigt:
- Fig. 1: die Komponenten Source List (SL), den T-IP Client, den Master IP, der den Personal Identifier (PI) aus dem der Pseudonymmous-Personal-Identifier (PPI) generiert wird und mit statistischen Daten (SD) und unkritischen Daten (UD) weitergeleitet wird and die Trusted Database (T-DB) bzw. die Quelle;
- Fig. 2: zeigt den Aufbau des T-IP Client;
- Fig. 3: zeigt die Ablage der Daten in einer T-DB;
- Fig. 4: zeigt den Ablauf im T-IP Master;
- Fig. 5: zeigt die verschlüsselte Ablage in der Datenbank;
- Fig. 6: zeigt die Zuordnung der Person zu einer PI für die Reidentifizierung;

### Beschreibung der bevorzugten Ausführungsform:

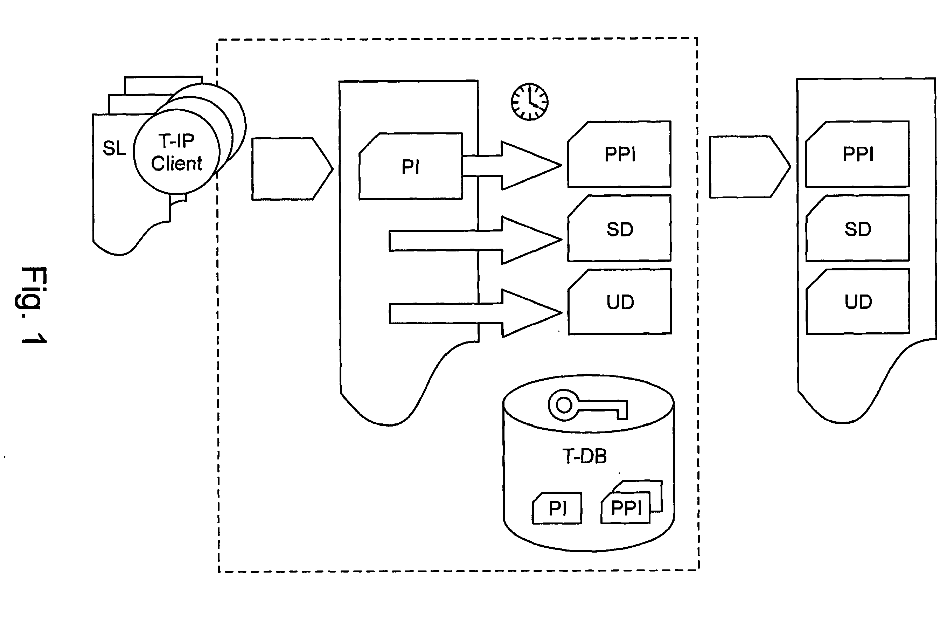

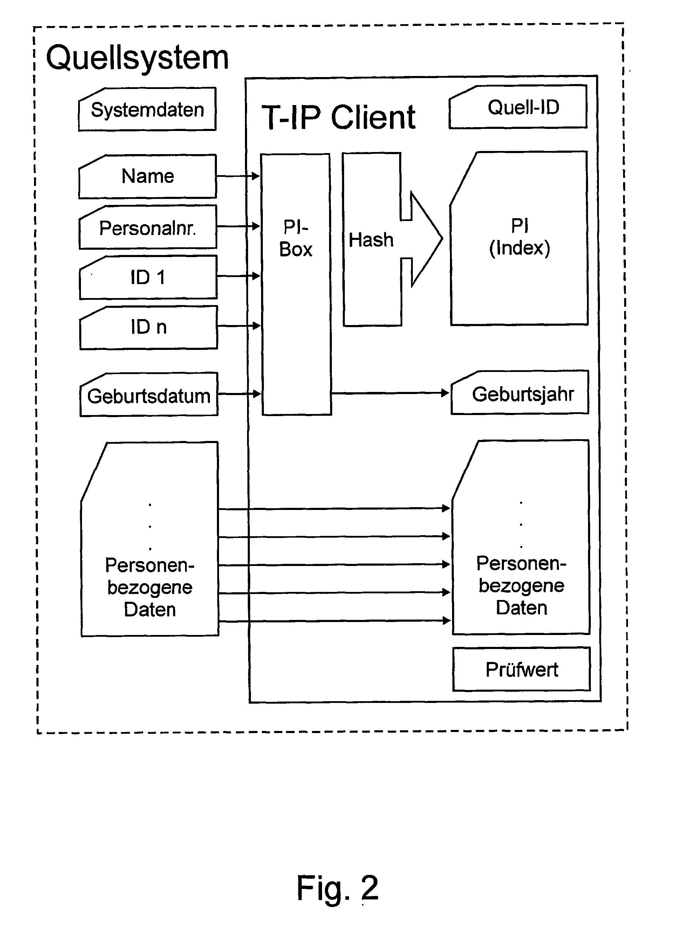

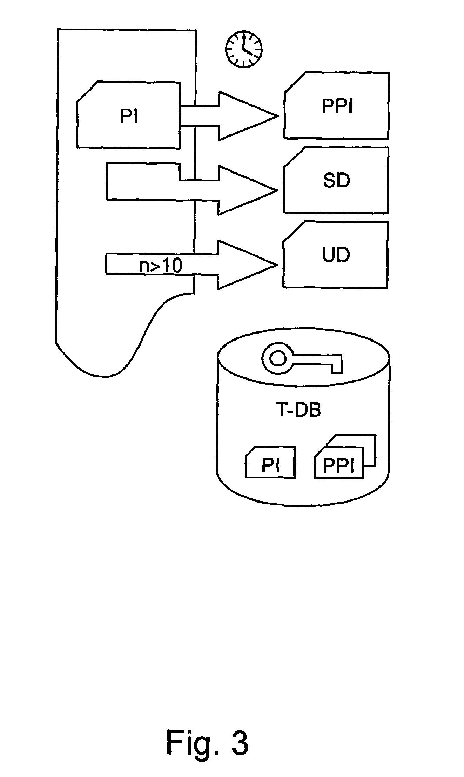

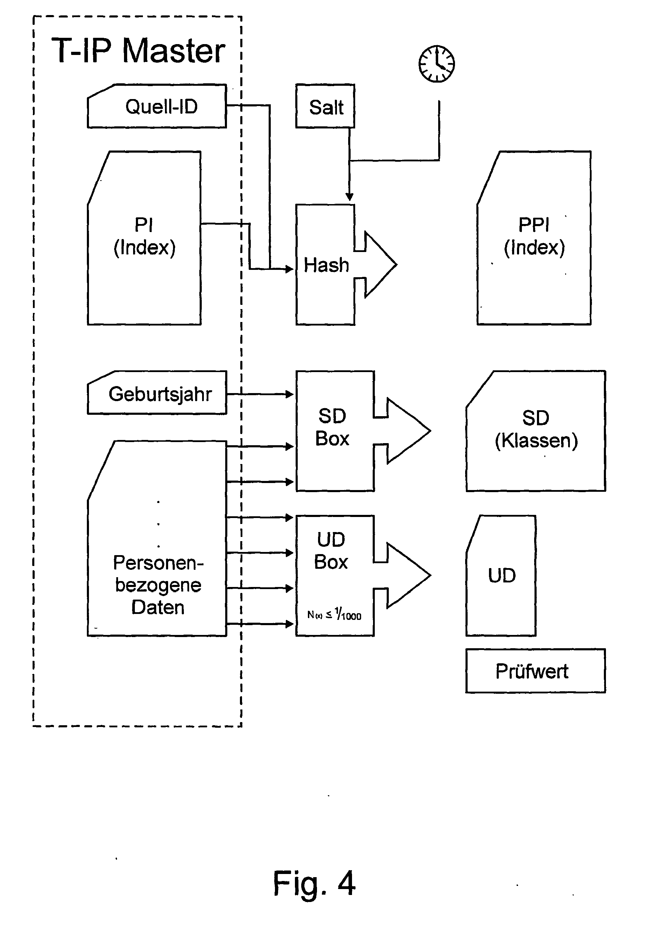

Der in den Fig. 1 und 2 dargestellte T-IP-Client verarbeitet personenbezogene Daten aus Quell-Datenbanken (Source Lists). Aufgabe des T-IP Clients ist es, personenbezogene Daten des Quellsystems aufzubereiten, zu pseudonymisieren, in einer bevorzugten Ausführungsform zu verschlüsseln und an den T-IP - Master zu übertragen, der detailliert in den Fig. 3 und 4 gezeigt wird.

Die Vorpseudonymisierung erfolgt in einer P-Box des T-IP Clients, die dem Quellsystem von dem T-IP-System bereitgestellt wird, aber unter der Verantwortung des für das Quellsystem Verantwortlichen arbeitet. Jedes Quellsystem verfügt über eine P-Box. Die rechtliche Verantwortung für die Pseudonymisierung und die Übermittlung der vorpseudonymisierten Datensätze (PI) liegt bei der für das Quellsystem verantwortlichen Stelle.

Unter der Voraussetzung, dass in den Quelldatenbanken eine einheitliche Datenaufbereitung erfolgt, ist die Bildung eines einheitlichen Vorpseudonyms PI möglich. Die Vorpseudonymisierung in der P-Box erfolgt mit einem anspruchsvollen Verfahren, um eine Reidentifizierung innerhalb des T-IP oder durch Angriffe auf der Übermittlungsstrecke vom T-IP-Client an den T-IP -Master zu verhindern. Die Weitergabe der vorpseudonymisierten Datensätze an den T-IP -Master sollte bevorzugt verschlüsselt erfolgen. Sichergestellt soll sein, dass die Datensätze tatsächlich von dem adressierten T-IP - Master und keinem Dritten empfangen werden (Authentifizierung mit Zertifikat).

Als Vorpseudonym werden der Name in Verbindung mit weiteren Identifikationsmerkmalen wie das Geburtsdatum, der Geburtsort und weitere eindeutige Identifikatoren (Personalnummer, Kundennummer u. ä.) zugrunde gelegt. Diese Identifikatoren werden in der P1 Box des T-IP Clients durch einen Algorithmus so verändert, dass die entstandene Zeichenkette für einen Angreifer (ohne Kenntnisse eines Datensatzes) keinen Sinn ergibt. Die Zeichenkette wird anschließend durch eine Hash-Funktion in das Vorpseudonym PI überführt.

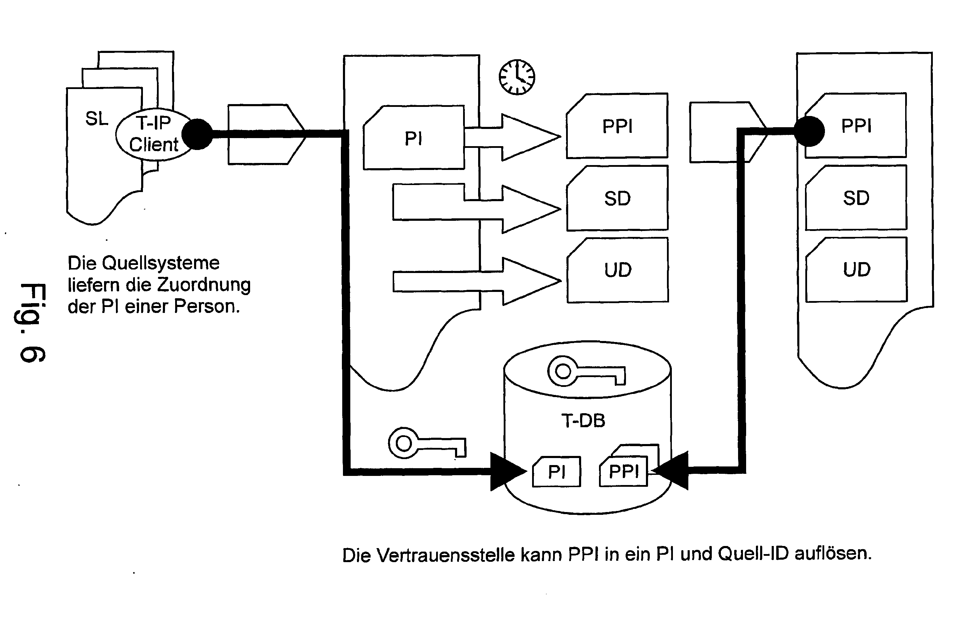

Im Rahmen der Vorpseudonymisierung sollen personenbezogene Daten bereits in Datenklassen übertragen werden (z. B. Geburtsdatum -> Geburtsjahr, PLZ -> PLZ-Bereich usw. siehe Fig. 2). Die Übertragung in Datenklassen erfolgt bei der Installation des Systems (Customizing) unter Berücksichtigung der Anforderungen an die Auswertung. Auf diese Weise soll eine Reidentifizierung der vorpseudonymisierten Datensätze erschwert werden. Das Verfahren dient nur zur (Vor-) Pseudonymisierung der Datensätze aus den Quellsystemen, bevor sie an den T-IP -Master übermittelt werden (siehe Fig. 1 und Fig. 6). Die damit erreichte Qualität der Pseudonymisierung ist aber ggfs. noch nicht ausreichend, um die Datensätze an das Zielsystem übergeben zu können.

Vor der Übertragung an den T-IP -Master wird der vorpseudonymisierte Datensatz mit einer Quell-ID und einem Prüfwert versehen. Die Quell-ID liefert der T-DB die Information, aus welchem Quellsystem ein zur Reidentifizierung angeforderter Datensatz stammt. Der Prüfwert garantiert dem T-IP -Master die Integrität des übermittelten Datensatzes.

Damit die Daten eine hohe Aussagekraft haben, sollten die einbezogenen Quellsysteme einen einheitlich gepflegten Datenbestand haben. Probleme treten z.B. auf, wenn die Quellsysteme bspw. Datumsangaben oder Personalnummern unterschiedlich darstellen. Nur wenn derartige formatierungsbedingte Ungleichheiten ausgeräumt werden, kann ein Doppelabgleich über die Vorpseudonyme (PI) aus den Quellsystemen durchgeführt werden. Ziel dieser Maßnahme ist es, Datensätze einer Person auch dieser als Merkmalsträger zuordnen zu können. Allerdings müssen für einen solchen Doppelabgleich die betreffenden Datensätze im vorpseudonymisierten Zustand im T-IP -Master zwischengespeichert werden. Da im T-IP -Master die Quell-ID zur Bildung des Pseudonyms (PPI) herangezogen wird, werden aus identischen PI unterschiedliche Pseudonyme PPI erzeugt.

Standardmäßig werden Daten aus dem T-IP -Master an ein Zielsystem ohne die zugehörigen Pseudonyme ausgeliefert. Das Zielsystem erhält also im Regelfall nur anonymisierte Daten. Diese Daten können auch im T-IP -Master nicht mehr reidentifizieren werden, weil dieser Pseudonyme nicht auf Vorrat aufbewahrt.

Etwas anderes gilt, wenn ein Zielsystem Datensätze "mit der Möglichkeit zur späteren Reidentifizierung" anfordert. Nur in diesem Fall werden im T-IP -Master zu jedem Datensatz Pseudonyme (PPI) gebildet. Hierzu wird aus dem Vorpseudonym (PI) in Permutation mit einem Zeitstempel, einem Streuwert und der Quell-ID sowie durch eine Hash-Funktion der PPI erzeugt (siehe Fig. 4). Für eine spätere Reidentifizierung wird die Zuordnung des PPI zu der entsprechenden Quell-ID und der PI in der Trusted Database (T-DB) abgelegt (Siehe Fig. 3, 5 und 6).

Es ist nicht erforderlich, zusätzlich den Zeitwert zur Bildung des PPI aus den PI in der T-DB abzulegen, da er keine Funktion erfüllt. Es reicht, einen einfachen Datumseintrag abzulegen, um sicherzustellen, dass die Zuordnungsdatensätze nach einer vorgegebenen Frist gelöscht werden. Es können einem PI mehrere PPI zugewiesen sein, da bei jeder Anforderung einer Auswertung mit der Möglichkeit zur Reidentifizierung aus jedem PI ein neues PPI gebildet wird.

Je nach Auswertungsart und Anzahl der zugrunde liegenden Datensätze werden im T-IP -Master statistische Klassen (SD) gebildet. Auf diese Weise können z. B. Altersgruppen oder Postleitzahlbereiche zusammengefasst werden. Allerdings sollten die statistischen Datenklassen nicht zu fein gewählt sein, weil andernfalls eine Reidentifizierung möglich wäre. So lässt eine Datenklasse der Form "Firmenzugehörigkeit in Monaten" sowie einer Aufteilung nach Altersstufen in einzelne Jahre bereits eindeutige Rückschlüsse auf die Person zu. Auch die Bildung einer statistischen Klasse bspw. nach der Gruppe "der Anfangsbuchstaben des Nachnamens (A-C)" ergibt für Auswertungen wenig Sinn und würde die Bemühungen um eine Pseudonymisierung unterlaufen. Nur die Datenfelder, die praktisch keinen Personenbezug besitzen und bei denen zu jeder Ausprägung genügend Datensätze zusammengefasst werden, können als unkritische Daten (UD) unverändert bleiben. Besitzen Ausprägungen eines Datenfeldes nur wenige Einträge, so wird dieses Datenfeld als nicht auswertbar gekennzeichnet.

Dem Zielsystem darf es nicht möglich sein, die PPI auf eine Person zurückzuführen und auf diese Weise eine Reidentifizierung durchzuführen. Um eine Reidentifizierung von statistischen Daten (SD) im Data-Warehouse-System des Zielsystems zu verhindern, darf die Anzahl der übermittelten Daten nicht zu groß werden. Die Kontrolle über die Art und Anzahl der übermittelten Datensätze übernimmt in einer bevorzugten Ausführungsform eine Datenschutzkonsole. Die Daten auf dem Zielsystem sind nach Ablauf einer definierten Frist zu löschen.

Alle Datenübertragungen zwischen den Rollen bzw. Systemen finden vorzugsweise verschlüsselt statt. Die miteinander kommunizierenden Systeme haben sich vorzugsweise über ein Zertifikat zu authentifizieren.

Der T-IP -Master fordert auf Anforderung eines Zielsystems zum Zwecke einer Auswertung von den T-IP Clients der betreffenden Quellsysteme Daten an. Der T-IP-Client muss sich vergewissern, dass die Anforderung vom T-IP -Master kommt. Der T-IP-Client darf nur vorpseudonymisierte Daten und diese auch nur an den T-IP -Master übermitteln.

Ein Zielsystem fordert für eine Auswertung von dem T-IP - Master Daten an. Der T-IP -Master soll auf diese Anforderung nur reagieren, falls sie von einem berechtigten Zielsystem kommt. Der T-IP -Master übermittelt nur anonymisierte bzw. pseudonymisierte Daten und diese auch nur an das anfordernde Zielsystem.

Ein weiterer Export der Daten durch das Zielsystem an Dritte ist zu unterbinden.

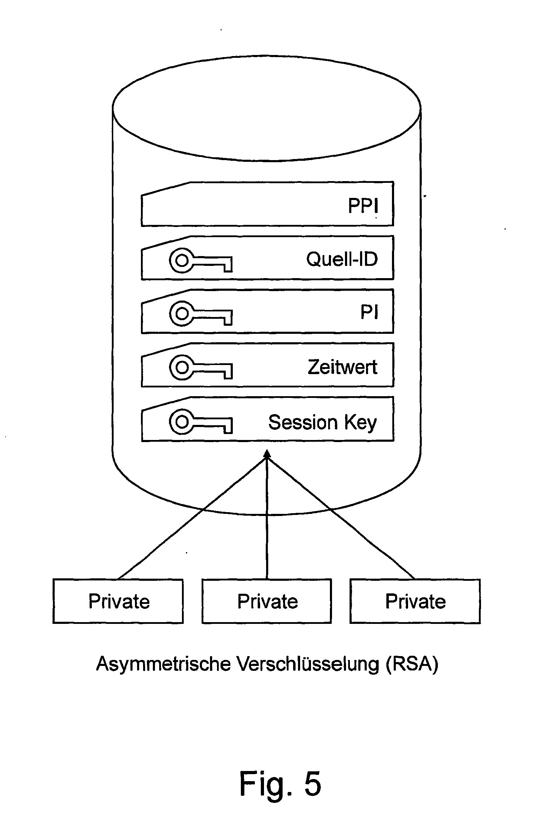

Ein Verantwortlicher eines Zielsystems fordert unter Angaben von Gründen von der Trusted-Database (T-DB) die Reidentifizierung von ausgewählten PPI einer bestimmten Auswertung an (Fig. 6). Die T-DB selbst ist nicht in der Lage, die PPI zu reidentifizieren. Sie verfügt nur über verschlüsselte Informationen (Fig. 5), in welchem Quellsystem die jeweiligen Datensätze zu reidentifizieren sind. Eine Reidentifizierung ist vorzugsweise nur mit Hilfe der Vertrauensstelle möglich. Es ist also Aufgabe der Vertrauensstelle, die Zulässigkeit der Reidentifizierung zu prüfen und sie freizugeben.

Erst nachdem drei Vertrauensinstanzen der Vertrauensstelle ihre Schlüsselfragmente (siehe Fig. 5) zur Verfügung gestellt haben, kann in der T-DB der private Schlüssel der Vertrauensstelle gebildet werden, um den Session Key zu entschlüsseln. Erst dieser Session Key erlaubt die Entschlüsselung der Zuordnungsdaten (PPI - PI - Quell-ID).

Die T-DB kann erst nach dieser Prozedur die zu den PPI zugehörenden PI an das mit Hilfe der Quell-ID identifizierte Quellsystem senden. Nur das Quellsystem ist in der Lage, die zu PI gehörende Person zu identifizieren, weil es entweder den PI gespeichert hat oder aber die PI der betreffenden Datensätze über den T-IP-Client neu errechnet und mit dem nachgefragten PI abgleicht. Das Quellsystem prüft und entscheidet, ob es die Identität der Person zu dem betreffenden PI gegenüber dem Zielsystem aufdecken darf.

Der T-IP -Master sollte einen Überblick darüber haben, welches Zielsystem welche Auswertungen anfordert und wie viele Datensätze an das betreffende Zielsystem bereits ausgeliefert worden sind. Es sollte eine grafische Darstellung der Kontrollzahlen erfolgen, so dass auch ein technischer Laie die Quantität und Qualität der Datenflüsse erkennen und bewerten kann. Sämtliche Anforderungen zu einer Reidentifizierung werden protokolliert.

Eine periodisch wiederkehrende, d.h. tägliche, wöchentliche und auch monatliche Benachrichtigung per Email über Art und Zahl der Anforderungen und Übermittlungen ist verteilhaft. Zusätzlich sollte eine Anwendung vorhanden sein, die die Übermittlungszahlen von einzelnen Zielsystemen auflistet und darstellt. Zur Kontrolle der T-IP Clients erfolgt eine Auswertung der Protokolle der von dort übersandten Daten (Quelle, Ziel, Zeit, Aktion), um eine fehlerfreie Funktion der T-IP-Clients nachvollziehen zu können.

Die T-DB speichert die ihm vom T-IP -Master übermittelten Zuordnungsdaten (PPI, Quell-ID, Zeitwert, PI) ab, wobei die drei zuletzt genannten Felder symmetrisch (mit einem Session Key) verschlüsselt werden. Die T-DB verschlüsselt den Session Key asymmetrisch mit dem öffentlichen Schlüssel der Vertrauensstelle und legt ihn anschließend in der Datenbank ab. Sie teilt den privaten Schlüssel der Vertrauensstelle bei seiner Erzeugung in mehrere Teile (Mehr-Augen-Prinzip), liefert die Teilschlüssel an die entsprechende Zahl von Vertrauensinstanzen aus und löscht sie im eigenen System.

Sie ermöglicht somit eine spätere Zuordnung von PPI zu PI und Quell-ID, wenn die drei Vertrauensinstanzen ihre Schlüsselteile zur Verfügung stellen, und löscht die Zuordnungsdatensätze (PPI, Quell-ID, Zeitwert, PI) nach einem definierten Zeitraum.

Möchte das Zielsystem einen mit einem PPI versehenen Datensatz reidentifizieren lassen, dann kann die T-DB den PPI lediglich dem entsprechenden PI und seiner Quell-ID zuordnen. Anschließend hat die T-DB die Anfrage nach einer Reidentifizierung des PI an das Quellsystem zu richten, das für die Zuordnung des PPI zum PI den T-IP-Client benötigt. Die Reidentifizierung kann aber nur veranlasst werden, wenn die Vertrauensstelle alle Teile des Schlüssels zur Verfügung stellt, um die Zuordnung des PPI zum PI im T-DB zu entschlüsseln. Eine Zuordnung des PPI zum PI ist nur über das Quellsystem möglich. Das Zielsystem kann eine Reidentifizierung also nur veranlassen, wenn die T-DB, die Vertrauensstelle sowie das Quellsystem zusammenwirken. Aus der Sicht des Betroffenen ist eine Reidentifizierung seiner pseudonymisierten Daten nur möglich, wenn das Quellsystem diese dadurch ermöglicht, dass es die Identität des Pseudonyms gegenüber der Vertrauensstelle bzw. dem Zielsystem aufdeckt. Dieser Fall entspricht dem einer Übermittlung der personenbezogenen Daten an einen Dritten.

Die Vertrauensstelle (Fig. 6) sichert die Zuordnung von PPI zu PI und Quell-ID, weil nur mit ihrem privaten Schlüssel der Datensatz mit der Zuordnung entschlüsselt werden kann. Die Vertrauensstelle schützt vor einem unbefugten Zusammenwirken, indem der private Schlüssel von der T-DB auf typischerweise drei Vertrauensinstanzen verteilt wird (Bspw. Betriebsrat, Geschäftsführung und Datenschutzbeauftragter), so dass eine Entschlüsselung der Zuordnung von PPI zu PI und Quell-ID nur möglich ist, wenn diese Vertrauensinstanzen ihre Teilschlüssel zusammenfügen.

Die Vertrauensstelle gibt die Zuordnung von PPI zu PI und Quell-ID aus der T-DB frei, indem sie den Zuordnungsdatensatz entschlüsselt.

Die Beschreibung der bevorzugten Ausführungsform stellt lediglich eine mögliche Ausführungsform bereit, die nicht beabsichtigt, die folgenden Ansprüche zu beschränken.

## Patentansprüche

1. Verfahren zur Pseudonymisierung von digitalen Datensätzen aus einem Quellsystem, die an ein Zielsystem gerichtet sind, mit einem T-Identity-Protector, T-IP, in dem die Pseudonymisierung nach dem Konzept des auf unterschiedliche Rollen verteilten Wissens durchgeführt bzw. aufgehoben wird, umfassend ein T-IP-Client System und ein T-IP -Master System, umfassend folgende Schritte:
- der T-IP-Client empfängt Datensätze, die Identifikationsmerkmale enthalten und zugeordnete personenbezogene Daten, aus einem mit einer Quell-ID versehenen Quellsystem, wobei die Quell-ID auf eine Ursprungsdatei im Quellsystem verweist,
- der T-IP-Client vorpseudonymisiert die Datensätze, indem eine erste Pseudonymisierung der Identifikationsmerkmale in ein Vorpseudonym, PI, durchgeführt wird, und kennzeichnet das Vorpseudonym, PI mit der Quell-ID, wobei lediglich das Quellsystem Zugriff auf die durchgeführte Vorspeudonymisierung hat;
- das Vorpseudonym PI wird an den T-IP -Master übermittelt und nach dem Übermitteln mit den Datensätzen im T-IP-Client gelöscht;
- der T-IP Master erstellt zu jedem Datensatz ein Pseudonym, PPI, das aus dem Vorpseudonym ,PI, und der Quell-ID, und weiteren Werten generiert wird;
- zum Zwecke einer späteren Reidentifizierung werden die Informationen aus den Feldern Pseudonym, PPI, Quell-ID, Vorpseudonym, PI, und weiteren Werten an die Trusted Database, T-DB, übermittelt, ;
- das Pseudonym, PPI, wird an das Zielsystem weitergeleitet und danach werden die Daten im T-IP-Master gelöscht

2. Das Verfahren nach dem vorhergehenden Anspruch, wobei der T-IP-Master aus kritischen personenbezogenen Datensätzen statistische Klassen (SD) bildet, und die Datenfelder verändert, die in Kombination mit anderen Informationen eine Reidentifizierung ermöglichen, und sie als unkritische Daten (UD) an das Zielsystem weitergibt.

3. Das Verfahren nach einem oder mehreren der vorhergehenden Ansprüche, wobei nach Abschluss der Pseudonymisierung das Quellsystem über die Ausgangsdaten, die Quell-ID sowie den Vorpseudonym (PI) verfügt.

4. Das Verfahren nach einem oder mehreren der vorhergehenden Ansprüche, wobei im T-IP-Client und/oder im T-IP -Master nach der Übermittlung alle vor/pseudonymisierten Daten gelöscht werden.

5. Das Verfahren nach einem oder mehreren der vorhergehenden Ansprüche, wobei Datensätze mit dem Pseudonym (PPI) an das Zielsystem transferiert werden, wobei zum Zwecke einer späteren Reidentifizierung die Informationen aus den Feldern Pseudonym (PPI), Quell-ID, Vorpseudonym (PI) und Zeitwert an die Trusted Database (T-DB) übermittelt werden.

6. Das Verfahren nach einem oder mehreren der vorhergehenden Ansprüche, wobei die Weitergabe der vorpseudonymisierten Datensätze an den T-IP -Master verschlüsselt erfolgt, vorzugsweise durch Authentifizierung mit Zertifikat.

7. Das Verfahren nach einem oder mehreren der vorhergehenden Ansprüche, wobei dem Vorpseudonym (PI) der Name in Verbindung mit vorzugsweise weiteren Identifikationsmerkmalen wie das Geburtsdatum, der Geburtsort und weitere eindeutige Identifikatoren, wie Personalnummer, Kundennummer, zugrunde gelegt wird, und diese Identifikatoren im T-IP Clients durch einen Algorithmus so verändert werden, dass die entstandene Zeichenkette für einen Angreifer ohne Kenntnis eines Datensatzes keinen Sinn ergeben, wobei die Zeichenkette vorzugsweise anschließend durch eine Hash-Funktion in das Vorpseudonym (PI) überführt wird.

8. Das Verfahren nach einem oder mehreren der vorhergehenden Ansprüche, wobei im Rahmen der Vorpseudonymisierung personenbezogene Datensätzen bereits in Datenklassen übertragen werden.

9. Das Verfahren nach einem oder mehreren der vorhergehenden Ansprüche, wobei der T-IP-Client einen Prüfwert dem Vorpseudonym (PI) zuweist.

10. Das Verfahren nach einem oder mehreren der vorhergehenden Ansprüche, wobei vor der Übertragung an den T-IP -Master der vorpseudonymisierte Datensatz mit einer Quell-ID und/oder einem Prüfwert versehen wird, wobei die Quell-ID der T-DB die Information liefert, aus welchem Quellsystem ein zur Reidentifizierung angeforderter Datensatz stammt und wobei der Prüfwert dem T-IP -Master die Integrität des übermittelten Datensatzes garantiert.

11. Das Verfahren nach einem oder mehreren der vorhergehenden Ansprüche, wobei aus dem Vorpseudonym (PI) in Permutation mit einem Zeitstempel, einem Streuwert und/oder der Quell-ID sowie durch eine Hash-Funktion der Pseudonym (PPI) erzeugt wird.

12. Das Verfahren nach einem oder mehreren der vorhergehenden Ansprüche, wobei für eine spätere Reidentifizierung die Zuordnung des Pseudonym (PPI) zu der entsprechenden Quell-ID und dem Vorpseudonym PI in einer Trusted Database (T-DB) abgelegt wird.

13. Das Verfahren nach einem oder mehreren der vorhergehenden Ansprüche, wobei erst nachdem mehrere Vertrauensinstanzen der Vertrauensstelle ihre Schlüsselfragmente zur Verfügung gestellt haben, in der T-DB der private Schlüssel der Vertrauensstelle gebildet werden kann, um den Session Key zu entschlüsseln, denn erst dieser Session Key erlaubt die Entschlüsselung der Zuordnungsdaten.

14. Das Verfahren nach einem oder mehreren der vorhergehenden Ansprüche, wobei die T-DB vom T-IP - Master übermittelte Zuordnungsdaten (PPI, Quell-ID, Zeitwert, PI) abspeichert, wobei die vorzugsweise drei zuletzt genannten Felder symmetrisch, vorzugsweise mit einem Session Key verschlüsselt werden, der Session Key asymmetrisch mit dem öffentlichen Schlüssel der Vertrauensstelle verschlüsselt wird, und anschließend in der Datenbank ablegt wird, wobei der private Schlüssel bei seiner Erzeugung in mehrere Teile (Mehr-Augen-Prinzip) den Vertrauensstellen mitgeteilt wird, und wobei die Teilschlüssel an die entsprechende Zahl von vertrauensstellen ausgeliefert wird.

15. Das Verfahren nach einem oder mehreren der vorhergehenden Ansprüche, wobei die Datenverteilung so aussieht, dass nur das Quellsystem in der Lage ist, die zum Vorpseudonym (PI) gehörende Person zu identifizieren, weil es entweder das Vorpseudonym (PI) gespeichert hat oder aber die PI der betreffenden Datensätze über den T-IP-Client neu errechnet und mit dem nachgefragten Vorpseudonym (PI) abgleicht.

16. Das Verfahren nach einem oder mehreren der vorhergehenden Ansprüche, wobei der T-IP -Master einen Überblick darüber hat, welches Zielsystem welche Auswertungen anfordert und wie viele Datensätze an das betreffende Zielsystem bereits ausgeliefert worden sind.

17. Vorrichtung **gekennzeichnet durch** Mittel und eine Einrichtung, die den Ablauf des Verfahrens nach einem oder mehreren der vorhergehenden Ansprüche erlaubt.

18. Datenträger **gekennzeichnet durch** eine Struktur, die beim Laden in einen Computer oder mehrere Computer ein Verfahren nach einem oder mehreren der vorhergehenden Verfahrensansprüche ausführt.

## Claims

1. Method for pseudonymization of digital data records from a source system that are directed to a target system, with a T- Identity Protector, T- IP, in which the pseudonymization carried out or revoked on the concept of different roles distributed knowledge, including a T- IP client system and a T- IP - master system, comprising the steps of:
- The T- IP client receives data records containing identifiers and associated personal data from a source system provided with a source ID, where the source ID refers to a source file in the source system,
- The T- IP client pre-pseudomizes the data records by carrying out a first pseudonymization of the identifiers in a pre-pseudonym, PI, and marks the pre-pseudonym, PI, with the source ID, wherein only the source system has access to the performed pre-pseudonymization;
- the pre-pseudonym PI is transmitted to the T- IP Master and deleted after submitting the records to the T- IP client;
- the T- IP Master creates a pseudonym for each data record, PPI, that is generated from the pre pseudonym, PI, and the source TD, and other values;
- For the purpose of later re-identification, the information from the fields pseudonym, PPI, source ID, pre-pseudonym, PI, and other values are transmitted to the Trusted Database, T- DB;
- the pseudonym, PPI , is forwarded to the target system and then the data in the T- IP Master will be deleted.

2. The method according to the preceding claim, wherein the T- IP Master forms statistical classes out of critical personal data records (SD), and changes the data fields which, in combination with other information, enable a re-identification, and passes the non-critical data (UD) to the target system.

3. The method according to one or more of the preceding claims, wherein after completion of the pseudonymization, the source system has access to the source ID and the pre-pseudonym, PI,.

4. The method according to one or more of the preceding claims, wherein in the T- IP Client, and / or in the T-IP Master all pre-pseudonymized data is deleted after transmission.

5. The method according to one or more of the preceding claims, wherein data records with the pseudonym (PPI) are transferred to the target system, wherein for the purpose of re-identification information from the fields pseudonym (PPI), source ID, pre-pseudonym (PI) and time value are send to the trusted database (T- DB).

6. The method according to one or more of the preceding claims, wherein the transmission of the pre-pseudonymized data records to the T-IP-Master is made encrypted, preferably through an authentication with certificate.

7. The method according to one or more of the preceding claims, wherein the pre-pseudonym (PI) is based on the name in connection with preferably further identifiers such as date of birth, place of birth, and other unique identifiers such as employee number, customer number, and these identifiers are changed in the T- IP clients in such way that the generated character string does not make any sense for an attacker/offender, wherein the character string is then transferred into the pre-pseudonym preferably by a hash function (PI).

8. The method according to one or more of the preceding claims, wherein personal data records are already transmitted as part of the data classes of the pre-pseudonymization.

9. The method according to one or more of the preceding claims, wherein the T- IP client assigns a verification value to the pre-pseudonym (PI).

10. The method according to one or more of the preceding claims, wherein the pre-pseudonymized data set is provided with a source identifier and / or a test value prior to the transmission to the T- IP Master, wherein the source ID of the DB - T provides the information, from which source system a requested data set originates for re-identification and wherein the test value guarantees the T- IP Master the integrity of the transmitted data set.

11. The method according to one or more of the preceding claims, wherein the pseudonym (PPI) is generated from the pre-pseudonym (PI) in permutation with a time stamp, a hash value and / or the source ID, and by a hash function.

12. The method according to one or more of the preceding claims, wherein, for a subsequent re-identification, the allocation of the pseudonym (PPI) to the corresponding source ID and the pre-pseudonym PI is stored in a trusted database (DB - T).

13. The method according to one or more of the preceding claims, wherein only after several trust instances have provided their key fragments the T- DB to the trust instances the private key can be create in the T-DB of the trust instances, to decrypt the session key, because only this session key allows the decryption of the allocation data.

14. The method according to one or more of the preceding claims, wherein the T - DB safes transmitted data from the T- IP Master (PPI, source ID, time value, PI), wherein preferably the last mentioned three fields are encrypted symmetrically, preferably with a session key, the session key is asymmetrically encrypted with the public key of the trusted third party, and is then stored in the database, wherein the private key (four-eyes principle) is provide to the trust instances in several parts, and the key parts are delivered to the appropriate number of trust instances.

15. The method according to one or more of the preceding claims, wherein the data distribution is such that only the source system is able to identify the pre-pseudonym (PI) associated person, because it has either stored the pre-pseudonym (PI) or it recalculates the PI with the T-IP client and verifies it with the requested pre-pseudonym (PI).

16. The method according to one or more of the preceding claims, wherein the T- IP Master has an overview of what the target system requests which evaluations and how many records have already been delivered to the relevant target system.

17. Apparatus **characterized by** means and configuration which allows the execution of the method according to one or more of the preceding claims.

18. Data carrier **characterized by** a structure that executes when loaded into a computer, or multiple computers, a method according to one or more of the preceding method claims.

## Revendications

1. Une méthode pour pseudonymiser des enregistrement de données numériques d'un système source destinés à un système cible, avec un Protecteur d'identité T, T-IP, dans laquelle la pseudonymisation réalisée ou révoquée sur le principe d'une connaissance distribuée de différents rôles, incluant un système client T-IP et un système maître T-IP, comportant les étapes :
- le client T-IP reçoit les enregistrements de données comportant des identifiants et des données personnelles associées émanant d'un système source fournis avec un identifiant ID source, dans laquelle l'identifiant ID source renvoie à un fichier source au sein du système source,
- le client T-IP pré-pseudonymise les enregistrements de données par une première pseudonymisation des identifiants en vue d'un pré-pseudonyme, PI, et marque le pré-pseudonyme , PI, avec l'identifiant iD source, dans laquelle seule le système source dispose d'un accès au pré-pseudonyme réalisé ;
- le pré-pseudonyme PI est transmis vers le maître T-IP et effacé postérieurement à la soumission des enregistrements au client T-IP ;
- le Maître T-IP crée un pseudonyme pour chaque enregistrement de données, PPI, qui est généré à partir du pré-pseudonyme, PI, et de l'identifiant ID de source, et d'autres valeurs ;
- dans le but d'une ré-identification ultérieure, l'information des champs pseudonyme, PPI, identifiant ID source, pré-pseudonyme, PI, et d'autres valeurs sont transmises à une base de données de confiance, T-DB ;
- le pseudonyme , PPI, est transmis au système cible et puis la donnée sera effacée du Maître T-IP.

2. La méthode selon la revendication précédente, dans laquelle le Maître T-IP forme des classes statistique extraites des enregistrements de données personnelles critiques (SD), et modifie les champs de données, en combinaison avec d'autres informations, permet une ré-identification, et fait suivre les données non critiques (US) vers le système cible.

3. La méthode selon l'une ou plusieurs des revendications précédentes, dans laquelle à la suite de la pseudonymisation, le système source dispose d'un accès à l'identifiant ID source et au pré-pseudonyme, PI,.

4. La méthode selon l'une ou plusieurs des revendications précédentes, dans laquelle toutes les données pré-pseudonymisées sont effacées du Client T-IP et/ou du Maître T-IP, postérieurement à la transmission.

5. La méthode selon l'une ou plusieurs des revendications précédentes, dans laquelle les enregistrements de données avec le pseudonyme (PPI) sont transférés vers le système cible, dans laquelle, pour permettre une ré-identification, une information émanant des champs pseudonyme (PPI), identifiant ID source, pré-pseudonyme (PI), et la valeur temps sont transmises à la base de données de confiance (T-DB).

6. La méthode selon l'une ou plusieurs des revendications précédentes, dans laquelle la transmission vers le Maître T-IP des enregistrements de données pré-pseudonymisés est effectuée de manière chiffrée, de préférence via une authentification par certificat.

7. La méthode selon l'une ou plusieurs des revendications précédentes, dans laquelle le pré-pseudonyme (PI) est basé sur le nom, de préférence en relation avec des identifiants supplémentaires, tel que la date de naissance, le lieu de naissance, et d'autres identifiants uniques tel que le numéro d'employé, le numéro de client, et ces identifiants sont modifiés dans les clients T-IP de telle manière que la chaîne de caractère générée ne signifie plus rien pour un intrus, dans laquelle la chaîne de caractère est ensuite transférée au sein du pré-pseudonyme, de préférence au moyen d'une fonction de hache (PI).

8. La méthode selon l'une ou plusieurs des revendications précédentes, dans laquelle les enregistrements de données personnelle sont déjà transmises en temps que classes de données de la pré-pseudonymisation.

9. La méthode selon l'une ou plusieurs des revendications précédentes, dans laquelle le client T-IP assigne une valeur de vérification au pré-pseudonyme (PI).

10. La méthode selon l'une ou plusieurs des revendications précédentes, dans laquelle la donnée pré-pseudonymisée est fournie avec un identifiant source et/ou une valeur de test avant la transmission vers le Maître T-IP, dans laquelle l'identifiant ID source du DB-T fournit l'information à partir de laquelle le système source génère un jeu de données requise pour une ré-identification, et dans laquelle la valeur de test garantit le Maître T-IP de l'intégrité du jeu de données transmises.

11. La méthode selon l'une ou plusieurs des revendications précédentes, dans laquelle le pseudonyme (PPI) est généré à partir du pré-pseudonyme (PI) en permutation avec une données temporelle, une valeur de hachage et/ou l'identifiant ID source, et une fonction de hachage.

12. La méthode selon l'une ou plusieurs des revendications précédentes, dans laquelle, en vue d'une ré-identifcation ultérieure, l'allocation du pseudonyme (PPI) à l'identifiant ID source correspondant ainsi que le pré-pseudonyme PI sont stockés dans une base de données de confiance (DB-T).

13. La méthode selon l'une ou plusieurs des revendications précédentes, dans laquelle la clé privée peut être générée au sein du T-DB des instances de confiance, pour le déchiffrage de la clé de session uniquement postérieurement à la communication des fragments de clé par plusieurs instances de confiance, puisque seule cette clé de session permet le déchiffrage des données allouées.

14. La méthode selon l'une ou plusieurs des revendications précédentes, dans laquelle le T-DB protège les données transmises du Maître T-IP (PPI, identifiant ID source, valeur temporelle, PI), dans laquelle, de préférence, les trois derniers champs mentionnés sont chiffrées de manière symétrique, de préférence à l'aide d'une clé de session, la clé de session étant chiffrée de manière asymétrique au moyen de la clé publique du tiers de confiance, et est ensuite stocké dans la base de données, dans laquelle la clé privée (principe des quatre yeux) est fournée aux instances de confiance en plusieurs parties, et les parties de clés sont livrées à un nombre approprié d'instances de confiance.

15. La méthode selon l'une ou plusieurs des revendications précédentes, dans laquelle la distribution de données est telle que seul le système source est capable d'identifier la personne associée au pré-pseudonyme (PI), en raison du fait qu'il a soit stocké le pré-pseudonyme (PI) ou qu'il recalcule le PI avec le client T-IP et le vérifie avec le pré-pseudonyme (PI) requis.

16. La méthode selon l'une ou plusieurs des revendications précédentes, dans laquelle le maître T-IP dispose d'une vue d'ensemble sur les requêtes du système cible, sur les évaluations et le nombre d'enregistrements qui ont été délivrés aux système cible pertinent.

17. Appareil **caractérisé en ce qu'**il comporte des moyens et une configuration permettant l'exécution de la méthode définie dans l'une des revendications précédentes.

18. Support de données **caractérisé par** une structure susceptible d'exécuter, une fois chargée au sein d'un ordinateur, ou au sein de multiples ordinateurs, une méthode suivant une ou plusieurs des revendications de méthodes précédentes.
